# EUROPÄISCHE PATENTSCHRIFT

(11) **EP 3 256 293 B1**
(45) Veröffentlichungstag und Bekanntmachung des Hinweises auf die Patenterteilung: **21.08.2019**
(21) Anmeldenummer: 16703433.9
(22) Anmeldetag: 04.02.2016
(51) Int. Cl.: B25J 19/00

(54) **ROBOTERSYSTEM**
ROBOT SYSTEM
SYSTÈME ROBOTIQUE

(30) Priorität: 09.02.2015 DE 102015001624
(43) Veröffentlichungstag der Anmeldung: 20.12.2017
(73) Patentinhaber: KUKA Deutschland GmbH, 86165 Augsburg (DE)
(72) Erfinder: FODOR, Robert, 86163 Augsburg (DE); VON TIESENHAUSEN, Cyrill, 86150 Augsburg (DE)
(74) Vertreter: Wallinger Ricker Schlotter Tostmann
(86) Internationale Anmeldenummer: PCT/EP2016/000190
(87) Internationale Veröffentlichungsnummer: WO 2016/128124

(56) Entgegenhaltungen:
- EP-A1- 1 439 026
- DE-U1-202012 100 384
- US-A1- 2014 155 758
- US-A1- 2015 004 837

## Beschreibung

Die vorliegende Offenbarung betrifft ein Robotersystem sowie ein Verfahren zur Herstellung eines solchen Robotersystems und eine Verwendung eines solchen Robotersystems.

Häufig werden Endeffektoren von Robotern nicht von dem Hersteller des Roboters bezogen, sondern beispielsweise im Unternehmen des Anwenders oder von hierauf spezialisierten Zulieferbetrieben angefertigt. Dies hat zur Folge, dass der Roboterhersteller oft nicht weiß, welche Funktionalitäten mit Hilfe des Roboters bereitgestellt werden sollen. Deshalb sieht der Roboterhersteller in der Regel an oder in dem Roboter eine Befestigungsvorrichtung für den Endeffektor sowie Signal- und/oder Energieversorgungsleitungen vor, welche eingesetzt werden, um den Endeffektor zu führen bzw. zu betreiben.

Insbesondere in der Medizintechnik gibt es je nach Anwendungsfall spezielle Anforderungen an die Verkabelung des Endeffektors, welcher in diesem Fachgebiet auch Anwendungsteil genannt wird. Es wird bei den Anwendungsfällen unterschieden in solche, bei denen das Anwendungsteil geerdet sein muss, und solche, bei denen das Anwendungsteil nicht geerdet sein darf.

Um beide Anwendungsfälle abzudecken ist es bisher für einen Roboterhersteller in der Regel notwendig, jeweils einen separaten Robotertyp im Produktangebot zu führen. Des Weiteren sind solche Robotersysteme in der Regel nicht oder nur mit sehr großem Aufwand von dem einen auf den anderen Anwendungsfall umrüstbar, indem beispielsweise das Robotersystem teilweise zerlegt und ein neues Kabel eingezogen wird.

Die US 2015/0004837 A1 offenbart ein elektromechanisches Verbindungssystem für ein medizinisches Gerät nach dem Oberbegriff des Anspruchs 1.

Eine Aufgabe einer Ausführung der vorliegenden Erfindung ist es, ein verbessertes Robotersystem bereitzustellen, welches es insbesondere gestattet, die Roboterfertigung und/oder die Umrüstung des Robotersystems von dem einen auf den anderen Anwendungsfall zu vereinfachen.

Diese Aufgabe wird durch ein Robotersystem mit den Merkmalen des Anspruchs 1 gelöst. Anspruch 11 stellt die Verwendung eines hier beschriebenen Robotersystems, Ansprüche 12 und 13 Verfahren zur Herstellung eines hier beschriebenen Robotersystems unter Schutz. Vorteilhafte Ausführungsformen der Erfindung sind Gegenstand der Unteransprüche.

Nach einem Aspekt der vorliegenden Erfindung weist ein Robotersystem auf: (I) einen Roboter zur Führung eines Anwendungsteils, wobei der Roboter einen Roboterarm mit einer Basis, einem zur Basis proximalen Bereich, einem zur Basis distalen Bereich und einer Befestigungsvorrichtung zur, insbesondere lösbaren, Befestigung des Anwendungsteils, wobei die Befestigungsvorrichtung in dem distalen Bereich angeordnet ist, eine Erdung und ein Kabel zur, insbesondere lösbaren, Verbindung mit dem Anwendungsteil und einem Steuergerät mit wenigstens einer Signalleitung und/oder wenigstens einer Energieversorgungsleitung, einem Schutzleiter, einem distalen Verbindungsmittel zur elektrischen, insbesondere lösbaren, Verbindung des Anwendungsteils mit dem Kabel und einem proximalen Verbindungsmittel zur elektrischen, insbesondere lösbaren, Verbindung des Steuergeräts mit dem Kabel aufweist; und (II) einen Adapter, aufweisend eine elektrische Leitung zur elektrischen, insbesondere lösbaren, Verbindung des Schutzleiters des Kabels mit der Erdung des Roboters.

Der Roboter ist in einer Ausführung ein Gelenkarmroboter mit einer Mehrzahl von Achsen, insbesondere mit wenigstens fünf, sechs oder sieben Achsen. Diese Roboterbauart hat in einer Ausführung den Vorteil, dass Roboter dieses Typs auf engem Raum agieren können. Dies ist insbesondere wichtig, wenn Roboter mit anderen Maschinen oder Menschen auf begrenztem Raum zusammen arbeiten müssen, wie zum Beispiel im Bereich der Medizin, insbesondere der Chirurgie, wo mehrere Roboter und/oder ein Roboter und mehrere Menschen um einen Operationstisch herum arbeiten. Des Weiteren benötigen diese Gelenkarmroboter in einer Ausführung nur eine sehr geringe Montagefläche, was es gestattet, diese am Boden, an der Wand, an der Decke oder auf einem Schienensystem an Boden, Wand oder Decke zu befestigen.

Von der Basis ausgehend, welche insbesondere die Montagefläche ist, wird ein proximaler und ein distaler Bereich des Roboterarms definiert. Bei einem auf dem Boden montierten und nach oben weisenden Robotersystem ist der proximale Bereich der untere Bereich des Roboterarms, d.h. der Bereich in der Nähe der Basis bzw. des Bodens. Der distale Bereich ist der Bereich am so gesehen oberen Ende des Roboterarms, wo in der Regel das Anwendungsteil oder zumindest eine Befestigungsvorrichtung zur Befestigung eines Anwendungsteils vorgesehen ist.

Das Anwendungsteil kann jede Art von Manipulator und/oder Sensor sein. Insbesondere kann das Anwendungsteil ein Greifer, ein Hebeelement, ein Tragelement, eine Fügevorrichtung, eine Trennvorrichtung, eine Sensorvorrichtung und insbesondere ein medizinisches Gerät sein. Hierzu zählen insbesondere Anwendungsteile für die minimalinvasive Chirurgie oder für chirurgische Eingriffe am offenen Herzen, wie zum Beispiel Scheren, Kameras, Sonden, Messer, Klammervorrichtungen oder Vorrichtungen zum Schließen von Wunden, Defibrilationsgeräte, Laser, Absaugvorrichtungen, Greifer und dergleichen. Das Anwendungsteil ist insbesondere eine elektrische, insbesondere elektronische, Vorrichtung, welche mit einem Steuergerät verbindbar, insbesondere verbunden ist bzw. wird und von diesem mit Befehlen und/oder Energie versorgbar ist, insbesondere versorgt ist bzw. wird und/oder diesem Daten, insbesondere Mess- bzw. Videodaten, überträgt bzw. hierzu eingerichtet bzw. vorgesehen ist. Das Anwendungsteil wird, insbesondere mechanisch, über die Befestigungsvorrichtung im distalen Bereich des Roboterarms gehalten und von diesem geführt. Die Verbindung zwischen der Befestigungsvorrichtung und dem Anwendungsteil kann lösbar oder nicht-lösbar ausgeführt sein. Das Anwendungsteil ist insbesondere eine separat hergestellte Komponente, welche in einer Weiterbildung nicht über eine Robotersteuerung mit angesteuert wird. Häufig sind dem Hersteller der Robotersysteme die späteren Anwendungen gar nicht bekannt. Deshalb weist das Anwendungsteil nach einer Ausführung ein von der Robotersteuerung unabhängiges Steuergerät auf, wobei die beiden letztgenannten erst im Rahmen der Mensch-Maschine-Schnittstelle, die insbesondere von den Herstellern der Anwendungsteile bereitgestellt wird, von einem Bediener gemeinsam angesprochen werden.

Die Erdung bezeichnet eine elektrisch leitfähige Verbindung des Robotersystems mit dem Erdreich bzw. mit einem Potential, welches, wenigstens im Wesentlichen, dem des Erdreichs entspricht. Ziel ist es insbesondere ein Bezugspotential bereitzustellen, das je nach Bedarf als Bezugsgröße herangezogen werden kann, und zum anderen, um die statische Aufladung des Roboters zu vermeiden und einen Schutzmechanismus im Falle einer Fehlschaltung des Stroms im Roboter bereitzustellen. Somit ist insbesondere unter anderem das Gehäuse des Roboters geerdet, um zu vermeiden, dass ein umstehender Bediener und/oder im Falle der Medizintechnik ein Patient einen elektrischen Schlag bekommt. Diese Erdung ist für den Roboter im normalen Betrieb in der Regel vor allem sehr sinnvoll, um unkontrolliert auftretende Stromflüsse aufgrund statischer Aufladung sicher abzuführen. Die Erdung ist in einer Ausführung Bestandteil des Roboters, insbesondere des Roboterarms.

Wie oben bereits erläutert, weiß der Hersteller des Roboters häufig gar nicht, für welche Anwendung der von ihm bereitgestellte Roboter letztendlich genutzt werden soll. Deshalb wird an oder in dem Roboter ein Kabel vorgesehen, welches dem Hersteller des Anwendungsteils die Versorgung und/oder Ansteuerung und/oder Datenauswertung gestattet, und welches in einer Ausführung nicht von den anderen Komponenten des Roboters genutzt wird. Nach einer Ausführung wird mit dem Kabel das Anwendungsteil mit dem Steuergerät über wenigstens eine Signalleitung und/oder wenigstens eine Energieleitung verbunden. Der Begriff Leitung sagt vorliegend nichts über Art, Anzahl und Ausgestaltung der jeweils vorgesehenen Adern aus. Eine Leitung kann folglich eine, zwei, drei oder mehr Adern enthalten. Die Adern können Kupfer, Aluminium oder andere stromtragende Metalle und/oder Legierungen aufweisen, aber auch Glas- und/oder Kunststoffmaterialien, um beispielsweise Lichtwellen zu übertragen.

Nach einer Ausführung wird das Anwendungsteil über das Kabel nur mit Energie versorgt, während der Datentransfer kabellos erfolgt.

Nach einer anderen Ausführung erfolgt über das Kabel nur ein Datentransfer mit dem Anwendungsteil, während das Anwendungsteil über eine eigene Energiequelle, insbesondere eine Batterie, oder einen separaten Energieanschluss verfügt.

Das Kabel weist einen Schutzleiter auf, welcher in einer Ausführung in Form einer die innenliegenden Signal- und/oder Energieversorgungsleitungen umgebenden Schirmung ausgeführt ist. Nach einer Ausführung weist diese Schirmung eine metall-aufweisende Folie und/oder ein Geflecht aus metall-aufweisendem Draht auf, welche bzw. welches die Signal- und/oder Energieversorgungsleitungen in sich aufnimmt, um diese vor Störeinflüssen in Form elektromagnetischer Felder, wie sie beispielsweise in der Umgebung von Elektromoren, wie sie auch insbesondere zur Bewegung des Roboterarms genutzt werden, abzuschirmen.

Das Kabel ist nach einer Ausführung zumindest an seinen Enden mit Verbindungsmitteln versehen. Gemäß der obigen Definitionen weist das Kabel insbesondere ein proximales Verbindungsmittel in der Nähe der Basis und ein distales Verbindungsmittel in der Nähe des Befestigungsmittels zur mechanischen Befestigung des Anwendungsteils an dem Roboterarm auf. Nach einer Ausführung ist das proximale Verbindungsmittel mit dem Steuergerät elektrisch leitend verbindbar, insbesondere verbunden, und/oder das distale Verbindungsmittel mit dem Anwendungsteil elektrisch leitend verbindbar, insbesondere verbunden.

Nach einer Ausführung ist die Verbindung des proximalen Verbindungsmittels mit dem Steuergerät und/oder die Verbindung des distalen Verbindungsmittels mit dem Anwendungsteil lösbar. Dies ist vorteilhaft, um das Robotersystem im Laufe seiner Nutzungsdauer an verschiedene Aufgaben anzupassen.

Das Robotersystem weist wie oben bereits erläutert neben dem Roboter einen Adapter auf, welcher den Schutzleiter des Kabels mit der Erdung des Roboters verbindet bzw. hierzu vorgesehen bzw. eingerichtet ist. Dies ist vorteilhaft, weil so nun erstmals eine Möglichkeit bereitgestellt wird, den Roboter auf effiziente Weise zwischen den beiden oben beschriebenen Anwendungsfällen umzurüsten. Hierzu wird der Schutzleiter des Kabels mit der Erdung des Roboters verbunden, insbesondere kurzgeschlossen, um so den Schutzleiter auf das Erdungspotential des Roboters zu ziehen. Hierdurch entsteht über die Erde ein geschlossener elektrischer Stromkreis zwischen dem Anwendungsteil und der Umgebung, wie er für einige Anwendungen vorteilhaft ist. Nach einer Ausführung erfolgt die Erdung über einen Kontakt des Schutzleiters mit einem geerdeten Gehäuseteil des Roboters oder über eine separate Erdungsleitung, welche in einer Ausführung innerhalb des Roboterarms verläuft. Letztere Konfiguration ist vor allem dann bevorzugt, wenn im normalen Betrieb große Ströme über die Erdung erwartet werden, weil dann das Gehäuse des Roboters stromlos verbleibt und keine deutlich erhöhte Gefahr eines elektrischen Schlages für den Anwender und/oder den Patienten besteht.

Nach einer Ausführung ist der Schutzleiter nicht geerdet, sofern er nicht in elektrisch leitendem Kontakt mit dem Adapter steht. Mit anderen Worten ist der adapterlose Schutzleiter nicht geerdet. Ist der Adapter nicht elektrisch leitend mit dem Schutzleiter des Kabels und der Erdung des Roboters verbunden, so ist in dieser Ausführung der Schutzleiter selbst nicht geerdet. Er befindet sich auf einem in der Regel vom Erdungspotential verschiedenen Energieniveau und es besteht keine signifikante elektrisch leitende Verbindung mit der Erde. Das bedeutet, dass ein nicht separat geerdetes, an diesen Schutzleiter angeschlossenes Anwendungsteil ebenfalls nicht geerdet ist. Es kann hier aufgrund von Isolationswiderständen über die Erde kein signifikanter Stromkreis geschlossen werden, weshalb man diesen Zustand auch als "floatend" bezeichnet. Dies ist vorteilhaft, da das Robotersystem nun ohne erhebliche Umrüstarbeiten in den beiden erforderlichen Betriebszuständen genutzt werden kann: Ist der Roboter mit dem Adapter in der oben beschriebenen Weise verbunden, so ist ein an dem Roboter entsprechend verbundenes Anwendungsteil geerdet. Wird der Roboter ohne den Adapter betrieben, so wird das Anwendungsteil in dem oben beschriebenen floatenden Modus betrieben.

Nach einer Ausführung weist das proximale und/oder das distale Verbindungsmittel wenigstens einen Stecker und/oder wenigstens eine Buchse auf.

Das proximale und/oder das distale Verbindungsmittel kann jede beliebige Stecker- und/oder Buchsenkonfiguration bzw. -kombination aufweisen. In einer Ausführung sind Zentrierelemente vorgesehen, welche das Einführen eines Verbindungsmittelgegenstückes des Anwendungsteils und/oder des Steuergerätes erleichtern. Diese Zentrierelemente können am Verbindungsmittel und/oder an dem Verbindungsmittelgegenstück vorgesehen sein. In einer weiteren Ausführung weist das Verbindungsmittel und/oder das Verbindungsmittelgegenstück einen Verdrehschutz auf, welcher eine Falschkontaktierung im Wesentlichen ausschließt. In einer weiteren Ausführung weist das Verbindungsmittel und/oder das Verbindungsmittelgegenstück Haltevorrichtungen, wie zum Beispiel Widerhaken, auf, um ein unbeabsichtigtes Trennen zu verhindern.

Nach einer Ausführung weist der Roboterarm ein Sicherungsmittel auf zur Verhinderung eines unautorisierten Lösens und/oder Befestigens des Adapters.

Gerade im Bereich der Medizintechnik gibt es einige Anwendungen, bei denen es nicht erwünscht oder sogar lebensgefährlich ist, wenn das Anwendungsteil im Betrieb geerdet ist. Anders herum gibt es aber auch Fälle, in denen es nicht erwünscht ist oder sogar lebensgefährlich ist, wenn das Anwendungsteil nicht geerdet ist. Daher ist es von besonderem Vorteil, zu gewährleisten, dass nur autorisiertes Personal dazu in der Lage ist, den Adapter an dem Roboter anzubringen oder von diesem zu lösen. Mögliche Maßnahmen umfassen, sind aber nicht beschränkt auf: Schlösser zur Verriegelung des Adapters an dem Roboter, Spezialhaltemittel, wie zum Beispiel Spezialschrauben, zur Montage des Adapters, welche nur mit speziellen Werkzeugen wieder gelöst werden können, Alarmsysteme, Notabschaltungssysteme und dergleichen.

Nach einer Ausführung weist das Robotersystem das Anwendungsteil auf, welches an der Befestigungsvorrichtung des Roboterarms, insbesondere lösbar, befestigt ist und über das distale Verbindungsmittel mit dem Kabel, insbesondere lösbar, verbunden ist, wobei der Adapter zwischen dem distalen Verbindungsmittel und dem Anwendungsteil angeordnet ist oder integral in dem Anwendungsteil angeordnet ist.

Nach einer Ausführung wird der Adapter als separates Element zwischen dem Kabel und dem Anwendungsteil angeordnet. Dies hat den Vorteil, dass der Adapter für mehrere verwendbaren Anwendungsteile bereitsteht und flexibel ein- und wieder ausgebaut werden kann.

Nach einer Ausführung ist der Adapter integral in dem Anwendungsteil angeordnet. Dies hat den Vorteil, dass ein so gestaltetes Anwendungsteil in einer Ausführung nicht ungeerdet verwendet werden kann und somit einen optimalen Schutz gegen den fälschlichen ungeerdeten Einsatz des Anwendungsteils ermöglicht.

Nach einer Ausführung weist das Robotersystem das Steuergerät zur Steuerung und/oder Auslesung und/oder Energieversorgung des Anwendungsteils auf, wobei das Steuergerät über das proximale Verbindungsmittel mit dem Kabel verbindbar, insbesondere verbunden ist bzw. wird und wobei der Adapter zwischen dem proximalen Verbindungsmittel und dem Steuergerät angeordnet wird bzw. ist oder integral in dem Steuergerät angeordnet ist.

Nach einer Ausführung wird bzw. ist der Adapter als separates Element zwischen dem Kabel und dem Steuergerät angeordnet. Dies hat den Vorteil, dass der Adapter für mehrere verwendbaren Steuergeräte bereitsteht und flexibel ein- und wieder ausgebaut werden kann.

Nach einer Ausführung ist der Adapter integral in dem Steuergerät angeordnet. Dies hat den Vorteil, dass ein so gestaltetes Steuergerät nicht ungeerdet verwendet werden kann und somit einen optimalen Schutz gegen den fälschlichen ungeerdeten Einsatz des Anwendungsteils ermöglicht.

Nach einer Ausführung des Robotersystems ist die wenigstens eine Signalleitung eingerichtet, Daten auf der Basis des Ethernet-Standards IEEE 802.3 zu übertragen.

Dies hat den Vorteil, dass Daten mit einer großen Bandbreite übertragen werden können und es eine Vielzahl von Soft- und Hardwareanwendungen gibt, welche bereits standardmäßig nach dem Ethernet-Standard eingerichtet sind. Somit ist eine effiziente, robuste und schnelle Datenübertragung zwischen Anwendungsteil und Steuergerät gewährleistet.

Nach einer Ausführung des Robotersystems ist die wenigstens eine Energieversorgungsleitung eingerichtet, eine elektrische Spannung an dem Anwendungsteil von bis zu 60 V bereitzustellen. Die übertragene elektrische Leistung kann auf einer Gleichspannung oder auf einer Wechselspannung basieren.

Nach einer Ausführung wird über die wenigstens eine Energieversorgungsleitung ein Gleichstrom oder ein Wechselstrom übertragen bzw. ist die Energieversorgungsleitung hierzu vorgsehen bzw. eingerichtet. Die Übertragung von Gleichstrom ist vorteilhaft, da viele Anwendungsteile Gleichstrom benötigen und somit auf einen entsprechenden Gleichrichter im Anwendungsteil verzichtet werden kann, welcher in der Regel benötigt wird, wenn Wechselstrom übertragen wird. Dagegen spricht für die Verwendung von Wechselstrom, dass dieser mit einem üblichen Generator vergleichsweise einfach erzeugt werden kann, da ein sinusförmiger Verlauf der Stromkurve die natürliche Folge einer Kreisbewegung des Generators ist.

Nach einer Ausführung des Robotersystems verläuft das Kabel wenigstens im Wesentlichen innerhalb des Roboterarms. Nach dieser Ausführung kann das Kabel entweder teilweise oder vollständig innerhalb des Roboterarms verlaufen.

Dies ist vorteilhaft, da nach dieser Ausführung ein Roboterarm bereitgestellt wird, welcher mindestens ein vollständig bzw. teilweise freilaufendes Kabel weniger aufweist, was zu einer deutlichen Verbesserung der Sicherheit und der Beweglichkeit des Roboterarms führt. Des Weiteren wird die Reinigung des Roboterarms, insbesondere in einer sterilen Umgebung wie einem Operationssaal, erleichtert, da die Reinigung durch das wenigstens im Wesentlichen innerhalb des Roboterarms verlaufenden Kabels nicht erschwert oder gar verhindert wird. Ein weiterer möglicher Vorteil dieser Ausführung ist, dass die Kraftwirkung des Kabels auf den Roboterarm und damit auf die Bewegung des Roboterarms in einem kraftgesteuerten Modus einfacher und/oder leichter berücksichtigt werden kann.

Nach einer Ausführung des Robotersystems ist der Roboter von dem Anwendungsteil durch eine Isolierung, insbesondere durch eine Kunststoffplatte, elektrisch isoliert und/oder der Roboter ist von dem Kabel, insbesondere durch eine Isolierung, insbesondere durch eine Kunststoffplatte, elektrisch isoliert.

Wie oben bereits angedeutet, ist es in einigen Anwendungsfällen vorteilhaft, dass eine weitestgehende Isolierung zwischen Roboterarm und Anwendungsteil bereitgestellt wird. Dies wird in einer Ausführung durch eine Kunststoffplatte gewährleistet, welche zwischen dem Anwendungsteil und dem Roboterarm in einer Weise angeordnet ist, dass, wenigstens im Wesentlichen, kein Stromfluss zwischen dem Anwendungsteil und dem Roboterarm auftritt. Des Weiteren ist es nach einer Ausführung vorteilhaft, das Kabel von dem Roboter elektrisch getrennt zu halten, da so eine elektrische Wechselwirkung zwischen Roboter und Anwendungsteil verhindert wird.

Nach einer Ausführung weist der Adapter auf einer ersten Seite erste Verbindungsmittel auf, welche komplementär sind zu den proximalen Verbindungsmitteln des Kabels, wobei der Adapter auf einer zweiten Seite zweite Verbindungsmittel aufweist, welche komplementär sind zu Verbindungsmitteln des Steuergeräts, oder der Adapter weist auf einer ersten Seite erste Verbindungsmittel auf, welche komplementär sind zu Verbindungsmitteln des Anwendungsteils, wobei der Adapter auf einer zweiten Seite zweite Verbindungsmittel aufweist, welche komplementär sind zu den distalen Verbindungsmitteln des Kabels.

Nach einer Ausführung entsprechen die proximalen Verbindungsmittel des Kabels den Verbindungsmitteln des Steuergerätes in komplementärer Weise, was dazu führt, dass das Steuergerät sowohl mit als auch ohne Adapter mit dem Kabel verbunden werden kann, ohne eines weiteren Verbindungsmittels zu bedürfen.

Nach einer Ausführung entsprechen die distalen Verbindungsmittel des Kabels den Verbindungsmitteln des Anwendungsteils in komplementärer Weise, was dazu führt, dass das Anwendungsteil sowohl mit als auch ohne Adapter mit dem Kabel verbunden werden kann, ohne eines weiteren Verbindungsmittels zu bedürfen.

Nach einem weiteren Aspekt der vorliegenden Erfindung wird das hier beschriebene Robotersystem verwendet, wobei das Anwendungsteil ein medizinisches Behandlungsgerät zur Behandlung eines Patienten, insbesondere mit elektrischer Energie, ist und/oder ein medizinisches Diagnosegerät ist, insbesondere zur, insbesondere elektrischen, Erfassung von Daten zu mindestens einer Körperfunktion des Patienten.

Nach einem weiteren Aspekt der vorliegenden Erfindung weist ein Verfahren zur Herstellung des oben beschriebenen Robotersystems auf:
(a) Herstellen einer, insbesondere lösbaren, elektrischen Verbindung zwischen dem Adapter und dem Kabel über das proximale Verbindungsmittel und Herstellen einer, insbesondere lösbaren, elektrischen Verbindung zwischen dem Adapter und dem Steuergerät; oder
(a') Herstellen einer, insbesondere lösbaren, elektrischen Verbindung zwischen dem Adapter und dem Kabel über das distale Verbindungsmittel und Herstellen einer, insbesondere lösbaren, elektrischen Verbindung zwischen dem Adapter und dem Anwendungsteil.

Nach einer Ausführung weist ein Verfahren zur Herstellung des oben beschriebenen Robotersystems zusätzlich oder alternativ auf:
(b) Trennen einer, insbesondere lösbaren, elektrischen Verbindung zwischen dem Adapter und dem Kabel und insbesondere Trennen einer, insbesondere lösbaren, elektrischen Verbindung zwischen dem Adapter und dem Steuergerät; oder
(b') Trennen einer, insbesondere lösbaren, elektrischen Verbindung zwischen dem Adapter und dem Kabel und insbesondere Trennen einer, insbesondere lösbaren, elektrischen Verbindung zwischen dem Adapter und dem Anwendungsteil.

Nach einer Ausführung weist das Verfahren weiterhin auf:
(c) Herstellen einer, insbesondere lösbaren, elektrischen Verbindung zwischen einem anderen Steuergerät und dem Kabel, insbesondere über den Adapter; oder
(c') Herstellen einer, insbesondere lösbaren, elektrischen Verbindung zwischen einem anderen Anwendungsteil und dem Kabel, insbesondere über den Adapter.

Das Robotersystem, welches den Roboter und den Adapter aufweist, ist insbesondere vorteilhaft, weil in einer Ausführung erstmals eine Möglichkeit bereitgestellt wird, sowohl Anwendungen mit geerdetem Schutzleiter als auch mit nicht-geerdetem Schutzleiter mit einem einzigen Roboter ohne erhebliche Umbaumaßnahmen an oder in dem Roboter zu realisieren.

Nach einer Ausführung liegt das Robotersystem in einer Konfiguration vor, in welcher die Komponenten Roboter, Anwendungsteil, Steuergerät und Adapter nicht miteinander verbunden sind. Ein Verfahren zur Herstellung eines oben genannten Robotersystems weist insbesondere die folgenden Schritte auf:
Herstellen einer, insbesondere lösbaren, elektrischen Verbindung zwischen dem Adapter und dem Kabel über das proximale Verbindungsmittel und Herstellen einer, insbesondere lösbaren, elektrischen Verbindung zwischen dem Adapter und dem Steuergerät;
Herstellen einer, insbesondere lösbaren, elektrischen adapterlosen Verbindung zwischen dem Kabel und dem Anwendungsteil über das distale Verbindungsmittel; und
Befestigen des Anwendungsteils an der Befestigungsvorrichtung des Roboterarms.

Ein alternatives Verfahren zur Herstellung eines oben genannten Robotersystems weist insbesondere die folgenden Schritte auf:
Herstellen einer, insbesondere lösbaren, adapterlosen elektrischen Verbindung zwischen dem Kabel und dem Steuergerät über das proximale Verbindungsmittel;
Herstellen einer, insbesondere lösbaren, elektrischen Verbindung zwischen dem Adapter und dem Kabel über das distale Verbindungsmittel und Herstellen einer, insbesondere lösbaren, elektrischen Verbindung zwischen dem Adapter und dem Anwendungsteil; und
Befestigen des Anwendungsteils an der Befestigungsvorrichtung des Roboterarms.

Nach einer Ausführung liegt das Robotersystem wahlweise in einer Konfiguration vor, in welcher die Komponenten Roboter, Anwendungsteil, Steuergerät und Adapter miteinander verbunden sind. Ein Verfahren zur Rekonfiguration des Robotersystems weist insbesondere die nachfolgenden Schritte auf:
Trennen einer, insbesondere lösbaren, elektrischen Verbindung zwischen dem Adapter und dem Kabel und Trennen einer, insbesondere lösbaren, elektrischen Verbindung zwischen dem Adapter und dem Steuergerät; und
Herstellen einer, insbesondere lösbaren, elektrischen adapterlosen Verbindung zwischen dem Kabel und demselben oder einem anderen Steuergerät über das proximale Verbindungsmittel.

Optional kann bei dem letztgenannten Verfahren auch das Anwendungsteil ausgetauscht werden, mit den Schritten:
Lösen des Anwendungsteils von der Befestigungsvorrichtung des Roboterarms; und
Befestigen eines anderen Anwendungsteils an der Befestigungsvorrichtung des Roboterarms.

Ein alternatives Verfahren zur Rekonfiguration des Robotersystems weist insbesondere die nachfolgenden Schritte auf:
Trennen einer, insbesondere lösbaren, elektrischen Verbindung zwischen dem Adapter und dem Kabel und Trennen einer, insbesondere lösbaren, elektrischen Verbindung zwischen dem Adapter und dem Anwendungsteil;
Lösen des Anwendungsteils von der Befestigungsvorrichtung des Roboterarms;
Herstellen einer, insbesondere lösbaren, elektrischen adapterlosen Verbindung zwischen dem Kabel und demselben oder einem anderen Anwendungsteil über das distale Verbindungsmittel; und
Befestigen desselben Anwendungsteils oder des anderen Anwendungsteils an der Befestigungsvorrichtung des Roboterarms.

Optional kann bei dem letztgenannten Verfahren auch das Steuergerät ausgetauscht werden, mit den Schritten:
Trennen der, insbesondere lösbaren, elektrischen Verbindung zwischen dem Kabel und dem Steuergerät; und
Herstellen einer, insbesondere lösbaren, elektrischen adapterlosen Verbindung zwischen dem Kabel und dem Steuergerät über das proximale Verbindungsmittel.

Nach einer Ausführung ist der Adapter von Schritt (a) bzw. von Schritt (b) integral in dem Steuergerät ausgebildet oder ist der Adapter gemäß Schritt (a') bzw. gemäß Schritt (b') integral in dem Anwendungsteil ausgebildet.

Dies hat den Vorteil, dass ein so gestaltetes Anwendungsteil bzw. Steuergerät niemals ungeerdet verwendet werden kann und somit einen optimalen Schutz gegen den fälschlichen ungeerdeten Einsatz des Anwendungsteils bzw. des Steuergeräts ermöglicht.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Robotersystem in einer teilweise schematischen Darstellung nach einer ersten Ausführung der vorliegenden Erfindung;
- Fig. 2: eine schematische Ansicht des Kabels und dessen Verschaltung nach der ersten Ausführung der vorliegenden Erfindung;
- Fig. 3: ein Robotersystem in einer teilweise schematischen Darstellung nach einer zweiten Ausführung der vorliegenden Erfindung;
- Fig. 4: eine schematische Ansicht des Kabels und dessen Verschaltung nach der zweiten Ausführung der vorliegenden Erfindung;
- Fig. 5: ein Robotersystem in einer teilweise schematischen Darstellung nach einer dritten Ausführung der vorliegenden Erfindung;
- Fig. 6: eine schematische Ansicht des Kabels und dessen Verschaltung nach der dritten Ausführung der vorliegenden Erfindung; und
- Fig. 7: zeigt eine teilweise schematische Darstellung eines Kabels zur Verwendung in einer der Ausführungen der vorliegenden Erfindung.

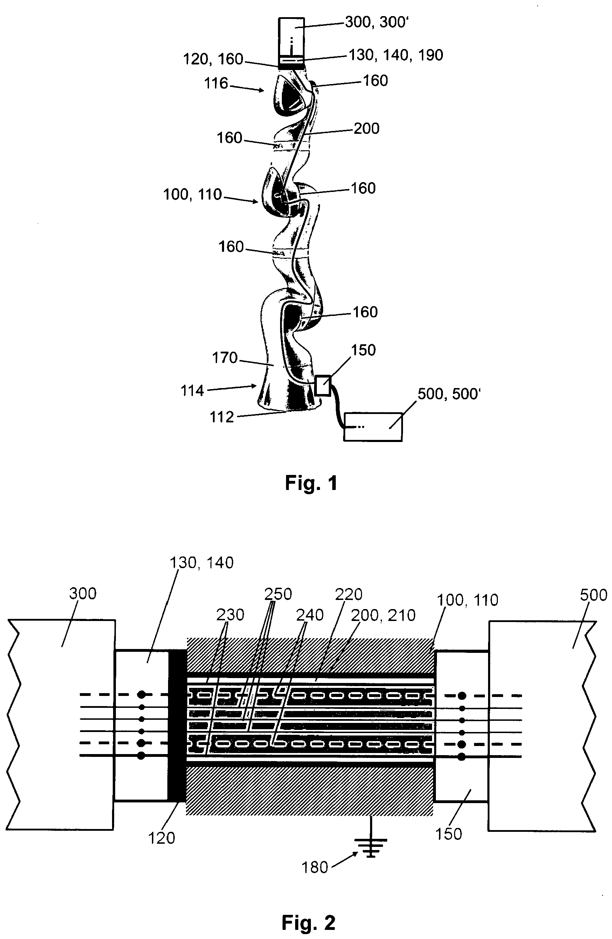

Die Figuren 1 und 2 zeigen eine erste Ausführung eines Robotersystems der vorliegenden Erfindung, wobei ein Adapter 400 nicht mit dem Roboter 100 verbunden ist. Der Roboter 100 weist einen Roboterarm 110 in Form eines mehrachsigen Roboterarms und ein Robotersteuergerät (nicht gezeigt) auf. Der Roboter 100 ist an seiner Basis 112 am Boden oder einem Schienensystem (nicht gezeigt) befestigt. In dem zur Basis benachbarten proximalen Bereich 114 ist ein proximales Verbindungsmittel 150 zur Verbindung eines in dem Roboterarm 110 angeordneten Kabels 200 mit einem Steuergerät 500 vorgesehen. Das Steuergerät 500 umfasst auch das Kabel, welches das Steuergerät 500 mit dem Roboterarm 110 direkt oder indirekt, insbesondere über den Adapter 400, verbindet. Der Roboterarm 110 weist eine Rotationsvorrichtung 170 und eine Mehrzahl von Gelenken 160 auf, welche insbesondere über elektromotorische Antriebe (nicht gezeigt) bewegt werden. Ein dem proximalen Bereich 114 entgegengesetzten distaler Bereich 116 weist eine Befestigungsvorrichtung 130 zur mechanischen Befestigung eines Anwendungsteils 300, ein distales Verbindungsmittel 130 zur elektrischen Verbindung des Kabels 200 mit dem Anwendungsteil 300, eine Isolierung 120 in Form einer Kunststoffplatte und ein Sicherungsmittel 190 zur Sicherung des Anwendungsteils 300 gegen eine nicht autorisierte (De-)Montage des Anwendungsteils 300.

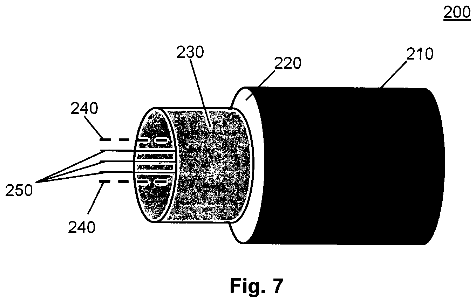

Das Kabel 200, welches im Detail in Fig. 7 dargestellt ist, weist eine Mehrzahl von Signalleitungen 250 und eine Mehrzahl von Energieversorgungsleitungen 240 auf, welche insbesondere jeweils für sich über eine separate Isolierung (nicht gezeigt) gegenüber den anderen Leitungen verfügen. Die Leitungen 240, 250 werden von einem Schutzleiter 230 umgeben, welcher diese gegen elektromagnetische Störfelder, wie sie beispielsweise von den Elektromotoren innerhalb des Roboterarms erzeugt werden, abschirmt. Der Schutzleiter 230 kann in Form einer metall- oder metallegierungshaltigen Folie und/oder einem metall- oder metallegierungshaltigen Drahtgeflecht ausgebildet sein. Zum Schutz gegen einen direkten elektrischen Energietransfer zwischen Roboterarm 110 und Kabel 200, weist das letztgenannte zusätzlich eine Isolationsschicht 220 auf, welche den Schutzleiter umgibt. Zum Schutz gegen Umwelteinflüsse wie Temperatur und/oder Feuchtigkeit weist das Kabel 200 weiterhin einen Kabelmantel 210 auf, welcher um die Isolationsschicht 220 herum vorgesehen ist. Isolationsschicht 220 und Kabelmantel 210 sind bevorzugt aus Kunststoff, insbesondere aus thermoplastischem Kunststoff ausgebildet. In einer Ausführung werden die Aufgaben des Kabelmantels 210 und der Isolationsschicht von einer gemeinsamen Schicht (nicht gezeigt) übernommen.

Der Roboter 100 bzw. der Roboterarm 110 weist eine Erdung 180 auf. Diese Erdung kann in Form einer elektrisch leitenden Verbindung des Robotergehäuses mit der Erde ausgebildet sein oder durch eine separate geerdete Leitung, welche insbesondere wenigstens im Wesentlichen im Inneren des Roboterarms 110 angeordnet ist.

Das Kabel 200 verläuft vollständig im Inneren des Roboterarms 110. An dem distalen Ende des Kabels 200 ist das distale Verbindungsmittel 140 elektrisch verbunden angeordnet und an dem proximalen Ende des Kabels 200 ist das proximale Verbindungsmittel 150 elektrisch verbunden angeordnet. Bei der Verbindung wird darauf geachtet, dass keine elektrisch leitfähige Verbindung zwischen dem Roboter 100 und dem Kabel 200 erzeugt wird.

Über das proximale Verbindungsmittel 150 wird das Kabel 200 mit dem Steuergerät 500 verbunden. Über das distale Verbindungsmittel 140 wird das Kabel 200 mit dem Anwendungsteil 300 verbunden. Durch den Schutzleiter bzw. die Schirmung 230, welcher bzw. welche nach der ersten Ausführung über das distale Verbindungsmittel 140 mit dem Anwendungsteil 300 verbunden ist und über das proximale Anwendungsmittel 150 mit dem Steuergerät 500 verbunden ist, jedoch nicht mit der Erdung 180 verbunden ist, liegt der Schutzleiter nicht auf dem Potential der Erdung 180, sodass das Robotersystem im sog. floatenden Modus betrieben wird.

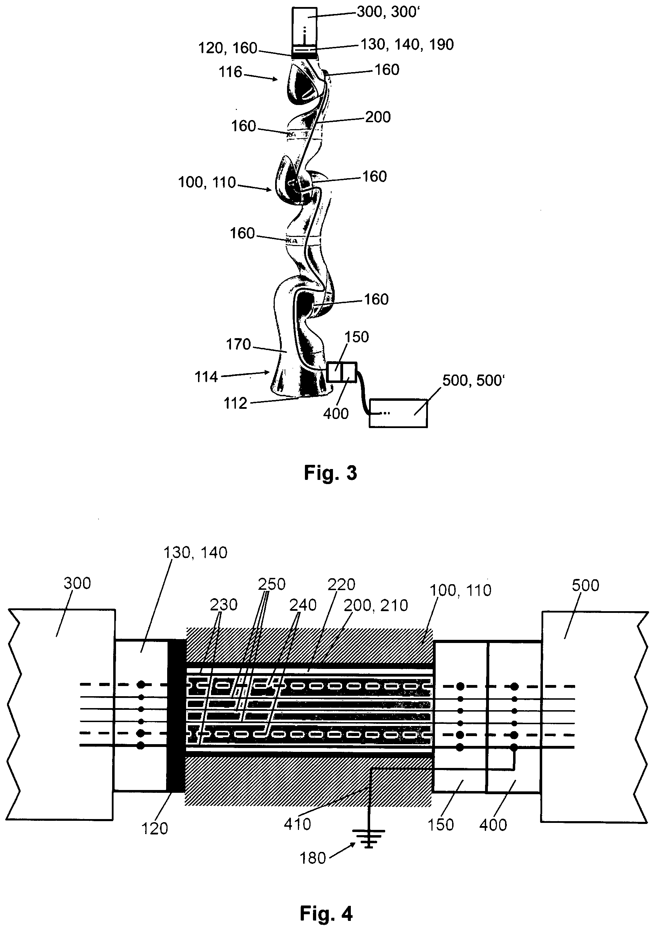

Die zweite Ausführung gemäß der Figuren 3 und 4 unterscheidet sich von der ersten Ausführung konstruktiv im Wesentlichen dadurch, dass der Adapter 400 zwischen dem proximalen Verbindungsmittel 150 und dem Steuergerät 500 elektrisch leitend zwischengeschaltet ist. Alle oben in Bezug zur ersten Ausführung getroffenen Aussagen sind auch für die zweite Ausführung zutreffend, sollte sich aus dem Text des folgenden Absatzes oder dem Wissen des Fachmanns nichts anderes ergeben.

Über das proximale Verbindungsmittel 140 und den Adapter 400 wird das Kabel 200 mit dem Steuergerät 500 verbunden. Durch den Schutzleiter bzw. die Schirmung 230, welcher bzw. welche nach der zweiten Ausführung über das distale Verbindungsmittel 140 mit dem Anwendungsteil 300 verbunden ist und über das proximale Anwendungsmittel 150 mit dem Steuergerät 500 verbunden ist und über den Adapter 400 und den Roboterarm 110 mit der Erdung 180 verbunden ist, liegt der Schutzleiter auf dem Potential der Erdung 180, sodass das Anwendungsteil im sog. geerdeten Modus betrieben wird. Der Adapter 400 kann insbesondere als integrale Komponente des Steuergeräts 500 ausgebildet sein, welche entweder in einem zum proximalen Verbindungsmittel 150 komplementären Gegenverbindungsmittel des Steuergeräte 500 angeordnet ist oder in dem Steuergerät 500 selbst angeordnet ist.

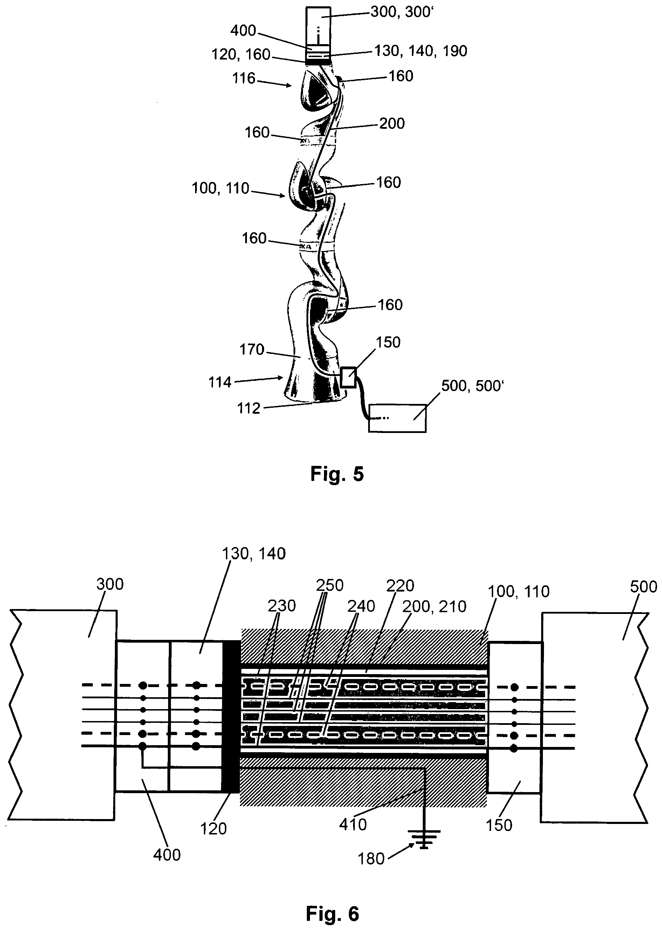

Die dritte Ausführung gemäß der Figuren 5 und 6 unterscheidet sich von der ersten Ausführung konstruktiv im Wesentlichen dadurch, dass der Adapter 400 zwischen dem distalen Verbindungsmittel 140 und dem Anwendungsteil 300 elektrisch leitend zwischengeschaltet ist. Alle oben in Bezug zur ersten Ausführung getroffenen Aussagen sind auch für die dritte Ausführung zutreffend, sollte sich aus dem Text des folgenden Absatzes oder dem Wissen des Fachmanns nichts anderes ergeben.

Über das distale Verbindungsmittel 140 und den Adapter 400 wird das Kabel 200 mit dem Anwendungsteil 300 verbunden. Durch den Schutzleiter bzw. die Schirmung 230, welcher bzw. welche nach der dritten Ausführung über das distale Verbindungsmittel 140 mit dem Anwendungsteil 300 verbunden ist und über das proximale Anwendungsmittel 150 mit dem Steuergerät 500 verbunden ist und über den Adapter 400 und den Roboterarm 110 mit der Erdung 180 verbunden ist, liegt der Schutzleiter auf dem Potential der Erdung 180, sodass das Anwendungsteil im sog. geerdeten Modus betrieben wird. Der Adapter 400 kann insbesondere als integrale Komponente des Anwendungsteils 300 ausgebildet sein, welche entweder in einem zum distalen Verbindungsmittel 140 komplementären Gegenverbindungsmittel des Anwendungsteils 300 angeordnet ist oder in dem Anwendungsteil 300 selbst angeordnet ist.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

**Bezugszeichenliste**

| | |
|---|---|
| 100 | Roboter |
| 110 | Roboterarm |
| 112 | Basis |
| 114 | proximaler Bereich des Roboterarms |
| 116 | distaler Bereich des Roboterarms |
| 120 | Isolierung |
| 130 | Befestigungsvorrichtung |
| 140 | distales Verbindungsmittel |
| 150 | proximales Verbindungsmittel |
| 160 | Gelenk |
| 170 | Rotationsvorrichtung |
| 180 | Erdung |
| 190 | Sicherungsmittel |
| 200 | Kabel |
| 210 | Kabelmantel |
| 220 | Isolationsschicht |
| 230 | Schutzleiter bzw. Schirmung |
| 240 | Energieversorgungsleitung |
| 250 | Signalleitung |
| 300 | Anwendungsteil |
| 400 | Adapter |
| 410 | elektrische Leitung |
| 500 | Steuergerät des Anwendungsteils |

## Patentansprüche

1. Robotersystem mit:
(I) einem Roboter **(100)** zur Führung eines Anwendungsteils **(300)**, wobei der Roboter **(100)** aufweist:
(a) einen Roboterarm **(110)** mit
einer Basis **(112)**;
einem zur Basis **(112)** proximalen Bereich **(114)**;
einem zur Basis **(112)** distalen Bereich **(116)**; und
einer Befestigungsvorrichtung **(130)** zur, insbesondere
lösbaren, Befestigung des Anwendungsteils **(300)**, wobei die
Befestigungsvorrichtung **(130)** in dem distalen Bereich **(116)**
angeordnet ist;
(b) eine Erdung **(180)**; und
(c) ein Kabel **(200)** zur, insbesondere lösbaren, Verbindung mit dem Anwendungsteil **(300)** und einem Steuergerät **(500)**, mit
wenigstens einer Signalleitung **(250)** und/oder wenigstens einer Energieversorgungsleitung **(240)**;
einem Schutzleiter **(230)**;
einem distalen Verbindungsmittel **(140)** zur elektrischen, insbesondere lösbaren, Verbindung des Anwendungsteils **(300)** mit dem Kabel **(200)**; und
einem proximalen Verbindungsmittel **(150)** zur elektrischen, insbesondere lösbaren, Verbindung des Steuergeräts **(500)** mit dem Kabel **(200)**; und
(II) einem Adapter **(400)**, **dadurch gekennzeichnet, dass** der Adapter (400) eine elektrische Leitung **(410)** zur elektrischen, insbesondere lösbaren, Verbindung des Schutzleiters **(230)** des Kabels **(200)** mit der Erdung **(180)** des Roboters (100) aufweist.

2. Robotersystem nach Anspruch 1, wobei der Schutzleiter **(230)** nicht geerdet ist, sofern er nicht in elektrisch leitendem Kontakt mit dem Adapter **(400)** steht.

3. Robotersystem nach einem der vorhergehenden Ansprüche, wobei das proximale und/oder das distale Verbindungsmittel **(140**, **150)** wenigstens einen Stecker und/oder wenigstens eine Buchse aufweist.

4. Robotersystem nach einem der vorhergehenden Ansprüche, wobei der Roboterarm **(110)** weiterhin ein Sicherungsmittel **(190)** aufweist zur Verhinderung eines unautorisierten Lösens und/oder Befestigens des Adapters **(400).**

5. Robotersystem nach einem der vorhergehenden Ansprüche, aufweisend das Anwendungsteil **(300)**, welches an der Befestigungsvorrichtung **(130)** des Roboterarms **(110)**, insbesondere lösbar, befestigt ist und über das distale Verbindungsmittel **(140)** mit dem Kabel **(200),** insbesondere lösbar, verbunden ist, wobei der Adapter **(400)**
(a) zwischen dem distalen Verbindungsmittel **(140)** und dem Anwendungsteil **(300)** angeordnet ist; oder
(b) integral in dem Anwendungsteil **(300)** angeordnet ist.

6. Robotersystem nach einem der Ansprüche 1 bis 4, aufweisend das Steuergerät **(500)** zur Steuerung und/oder Auslesung und/oder Energieversorgung des Anwendungsteils **(300)**, wobei das Steuergerät **(500)** über das proximale Verbindungsmittel **(150)** mit dem Kabel **(200)** verbunden ist und wobei der Adapter **(400)**
(a) zwischen dem proximalen Verbindungsmittel **(150)** und dem Steuergerät **(500)** angeordnet ist; oder
(b) integral in dem Steuergerät **(500)** angeordnet ist.

7. Robotersystem nach einem der vorhergehenden Ansprüche, wobei die wenigstens eine Signalleitung **(250)** eingerichtet ist, Daten auf der Basis des Ethernet-Standards IEEE 802.3 zu übertragen,
und/oder
wobei die wenigstens eine Energieversorgungsleitung **(240)** eingerichtet ist, eine elektrische Spannung an dem Anwendungsteil **(300)** von bis zu 60 V bereitzustellen.

8. Robotersystem nach einem der vorhergehenden Ansprüche, wobei das Kabel **(200)** wenigstens im Wesentlichen innerhalb des Roboterarms **(110)** verläuft.

9. Robotersystem nach einem der vorhergehenden Ansprüche, wobei der Roboter **(100)** von dem Anwendungsteil **(300)** durch eine Isolierung **(120)**, insbesondere durch eine Kunststoffplatte, elektrisch isoliert ist und/oder wobei der Roboter **(100)** von dem Kabel **(200)** elektrisch isoliert ist.

10. Robotersystem nach einem der vorhergehenden Ansprüche, wobei der Adapter **(400)** auf einer ersten Seite erste Verbindungsmittel aufweist, welche komplementär sind zu den proximalen Verbindungsmitteln **(150)** des Kabels **(200)**, und wobei der Adapter **(400)** auf einer zweiten Seite zweite Verbindungsmittel aufweist, welche komplementär sind zu Verbindungsmitteln des Steuergeräts **(500)**; oder
wobei der Adapter **(400)** auf einer ersten Seite erste Verbindungsmittel aufweist, welche komplementär sind zu Verbindungsmitteln des Anwendungsteils **(300)**, und wobei der Adapter **(400)** auf einer zweiten Seite zweite Verbindungsmittel aufweist, welche komplementär sind zu den distalen Verbindungsmitteln **(140)** des Kabels **(200).**

11. Verwendung eines Robotersystems nach einem der vorhergehenden Ansprüche, wobei das Anwendungsteil **(300)** ein medizinisches Behandlungsgerät zur Behandlung eines Patienten, insbesondere mit elektrischer Energie, ist und/oder ein medizinisches Diagnosegerät ist, insbesondere zur Erfassung von Daten zu mindestens einer Körperfunktion des Patienten.

12. Verfahren zur Herstellung eines Robotersystems nach einem der Ansprüche 1 bis 10, aufweisend:
(a) Herstellen einer, insbesondere lösbaren, elektrischen Verbindung zwischen dem Adapter **(400)** und dem Kabel **(200)** über das proximale Verbindungsmittel **(150)** und Herstellen einer, insbesondere lösbaren, elektrischen Verbindung zwischen dem Adapter **(400)** und dem Steuergerät **(500)**; oder
(a') Herstellen einer, insbesondere lösbaren, elektrischen Verbindung zwischen dem Adapter **(400)** und dem Kabel **(200)** über das distale Verbindungsmittel **(140)** und Herstellen einer, insbesondere lösbaren, elektrischen Verbindung zwischen dem Adapter **(400)** und dem Anwendungsteil **(300).**

13. Verfahren, insbesondere nach Anspruch 12, zur Herstellung eines Robotersystems nach einem der Ansprüche 1 bis 10, aufweisend:
(b) Trennen einer, insbesondere lösbaren, elektrischen Verbindung zwischen dem Adapter **(400)** und dem Kabel **(200)** und insbesondere Trennen einer, insbesondere lösbaren, elektrischen Verbindung zwischen dem Adapter **(400)** und dem Steuergerät **(500)**; oder
(b') Trennen einer, insbesondere lösbaren, elektrischen Verbindung zwischen dem Adapter **(400)** und dem Kabel **(200)** und insbesondere Trennen einer, insbesondere lösbaren, elektrischen Verbindung zwischen dem Adapter **(400)** und dem Anwendungsteil **(300).**

14. Verfahren nach Anspruch 13, weiterhin aufweisend:
(c) Herstellen einer, insbesondere lösbaren, elektrischen Verbindung zwischen einem anderen Steuergerät **(500')** und dem Kabel **(200)**, insbesondere über den Adapter **(400)**; oder
(c') Herstellen einer, insbesondere lösbaren, elektrischen Verbindung zwischen einem anderen Anwendungsteil **(300')** und dem Kabel **(200),** insbesondere über den Adapter **(400).**

15. Verfahren nach einem der vorangehenden Verfahrensansprüche, wobei der Adapter **(400)** gemäß Anspruch 12, Schritt (a) bzw. gemäß Anspruch 13, Schritt (b), integral in dem Steuergerät **(500)** ausgebildet ist oder wobei der Adapter **(400)** gemäß Anspruch 12, Schritt (a'), bzw. gemäß Anspruch 13, Schritt (b'), integral in dem Anwendungsteil **(300)** ausgebildet ist.

## Claims

1. A robot system comprising:
(I) a robot (100) for guiding an application part (300), wherein the robot (100) comprises:
(a) a robot arm (110) comprising:
a base (112);
a region (114) which is proximal to the base (112);
a region (116) which is distal to the base (112); and
a mounting device (130) for mounting the application part (300),
in particular in a releasable manner, wherein the mounting device (130) is arranged in the distal region (116);
(b) an electrical grounding (180); and
(c) a cable (200) for connection to the application part (300) and a control device (500), in particular in a releasable manner, comprising:
at least one signal line (250) and / or at least one power supply line (240);
a protective conductor (230);
a distal connection means (140) for electrically connecting the application part (300) to the cable (200), in particular in a releasable manner; and
a proximal connection means (150) for electrically connecting the control device (500) to the cable (200), in particular in a releasable manner; and
(II) an adapter (400), **characterised in that** the adapter (400) comprises an electrical line (410) for the electrical connection of the protective conductor (230) of the cable (200) to the electrical grounding (180) of the robot (100), in particular in a releasable manner.

2. The robot system according to claim 1, wherein the protective conductor (230) is not earthed unless it is in electrically conductive contact with the adapter (400).

3. The robot system according to any one of the preceding claims, wherein the proximal and / or the distal connection means (140, 150) comprises at least one plug and / or at least one socket.

4. The robot system according to any one of the preceding claims, wherein the robot arm (110) further comprises a securing means (190) for preventing unauthorised release and / or attachment of the adapter (400).

5. The robot system according to any one of the preceding claims, comprising the application part (300) which is mounted to the mounting device (130) of the robot arm (110), in particular in a releasable manner, and which is connected to the cable (200) via the distal connection means (140), in particular in a releasable manner, wherein the adapter (400)
(a) is arranged between the distal connection means (140) and the application part (300); or
(b) is arranged integrally in the application part (300).

6. The robot system according to any one of the claims 1 to 4, comprising the control device (500) for controlling and / or carrying out a read-out of and / or supplying power to the application part (300), wherein the control device (500) is connected to the cable (200) via the proximal connection means (150) and wherein the adapter (400)
(a) is arranged between the proximal connection means (150) and the control device (500); or
(b) is arranged integrally in the control device (500).

7. The robot system according to any one of the preceding claims, wherein the at least one signal line (250) is arranged to transmit data on the basis of the Ethernet standard IEEE 802.3,
and / or
wherein the at least one power supply line (240) is arranged to provide an electrical voltage at the application part (300) of up to 60V.

8. The robot system according to any one of the preceding claims, wherein the cable (200) extends at least substantially within the robot arm (110).

9. The robot system according to any one of the preceding claims, wherein the robot (100) is electrically insulated from the application part (300) by an insulation (120), in particular by a plastic plate, and / or wherein the robot (100) is electrically insulated from the cable (200).

10. The robot system according to any one of the preceding claims, wherein the adapter (400) has, on a first side, first connection means which is complementary to the proximal connection means (150) of the cable (200), and wherein the adapter (400) has, on a second side, second connection means which is complementary to the connection means of the control device (500); or
wherein the adapter (400) comprises, on a first side, first connection means which is complementary to connection means of the application part (300), and wherein the adapter (400) comprises, on a second side, second connection means which is complementary to the distal connection means (140) of the cable (200).

11. Use of a robot system according to any one of the preceding claims, wherein the application part (300) is a medical treatment device for treatment of a patient, in particular with electrical energy, and / or a medical diagnostic device, in particular for acquiring data relating to at least one body function of the patient.

12. A method of manufacturing a robot system according to any one of the claims 1 to 10, comprising:
(a) establishing an electrical connection, in particular a releasable electrical connection, between the adapter (400) and the cable (200) via the proximal connection means (150) and establishing an electrical connection, in particular a releasable electrical connection, between the adapter (400) and the control device (500); or
(a') establishing an electrical connection, in particular a releasable electrical connection, between the adapter (400) and the cable (200) via the distal connection means (140) and establishing an electrical connection, in particular a releasable electrical connection, between the adapter (400) and the application part (300).

13. A method, in particular according to claim 12, for manufacturing a robot system according to any one of the claims 1 to 10, comprising:
(b) disconnecting an electrical connection, in particular a releasable electrical connection, between the adapter (400) and the cable (200), and in particular disconnecting an electrical connection, in particular a releasable electrical connection, between the adapter (400) and the control device (500); or (b') disconnecting an electrical connection, in particular a releasable electrical connection, between the adapter (400) and the cable (200), and in particular disconnecting an electrical connection, in particular a releasable electrical connection, between the adapter (400) and the application part (300).

14. The method according to claim 13, further comprising:
(c) establishing an electrical connection, in particular a releasable electrical connection, between a further control unit (500') and the cable (200), in particular via the adapter (400); or
(c') establishing an electrical connection, in particular a releasable electrical connection, between a further application part (300') and the cable (200), in particular via the adapter (400).

15. The method according to any one of the preceding method claims, wherein the adapter (400) is integrally constructed, according to claim 12, step (a), or according to claim 13, step (b), in the control device (500), or wherein the adapter (400) is integrally constructed, according to claim 12, step (a'), or according to claim 13, step (b'), in the application part (300).

## Revendications

1. Système robot avec :
(I) un robot (100) pour le guidage d'une partie d'application (300), dans lequel le robot (100) présente ;
(a) un bras de robot (100) avec
une base (112) ;
une zone proximale (114) par rapport à la base (112) ;
une zone distale (116) par rapport à la base (112) ; et
un dispositif de fixation (130) pour la fixation, en particulier amovible, de la partie d'application (300), dans lequel le dispositif de fixation (130) est agencé dans la zone distale (116) ;
(b) une terre (180) ; et
(c) un câble (200) pour la liaison, en particulier amovible, à la partie d'application (300) et un appareil de commande (500), avec
au moins une ligne de signal (250) et/ou au moins une ligne d'alimentation en énergie (240) ;
un conducteur de protection (230) ;
un moyen de liaison distal (140) pour la liaison électrique, en particulier amovible, de la partie d'application (300) au câble (200) ; et
un moyen de liaison proximal (150) pour la liaison électrique, en particulier amovible, de l'appareil de commande (500) au câble (200) ; et
(II) un adaptateur (400), **caractérisé en ce que** l'adaptateur (400) présente une ligne électrique (410) pour la liaison électrique, en particulier amovible, du conducteur de protection (230) du câble (200) à la terre (180) du robot (100).

2. Système robot selon la revendication 1, dans lequel le conducteur de protection (230) n'est pas mis à la terre, s'il n'est pas en contact électriquement conducteur avec l'adaptateur (400).

3. Système robot selon l'une quelconque des revendications précédentes, dans lequel le moyen de liaison proximal et/ou le moyen de liaison distal (140, 150) présente au moins une fiche et/ou au moins une douille.

4. Système robot selon l'une quelconque des revendications précédentes, dans lequel le bras de robot (110) présente en outre un moyen de blocage (190) pour empêcher un détachement et/ou une fixation non autorisé de l'adaptateur (400).

5. Système robot selon l'une quelconque des revendications précédentes, présentant la partie d'application (300), laquelle est fixée, en particulier de manière amovible, au niveau du dispositif de fixation (130) du bras de robot (110) et est reliée, en particulier de manière amovible, au câble (200) par le biais du moyen de liaison distal (140), dans lequel l'adaptateur (400)
(a) est agencé entre le moyen de liaison distal (140) et la partie d'application (300) ; ou
(b) est agencé d'un seul tenant dans la partie d'application (300).

6. Système robot selon l'une quelconque des revendications 1 à 4, présentant l'appareil de commande (500) pour la commande et/ou la lecture et/ou l'alimentation en énergie de la partie d'application (300), dans lequel l'appareil de commande (500) est relié au câble (200) par le biais du moyen de la liaison proximal (150) et dans lequel l'adaptateur (400)
(a) est agencé entre le moyen de liaison proximal (150) et l'appareil de commande (500) ; ou
(b) est agencé d'un seul tenant dans l'appareil de commande (500).

7. Système robot selon l'une quelconque des revendications précédentes, dans lequel l'au moins une ligne de signal (250) est aménagée pour transmettre des données sur la base du standard Ethernet IEEE 802.3,
et/ou
dans lequel l'au moins une ligne d'alimentation en énergie (240) est aménagée pour mettre à disposition une tension électrique au niveau de la partie d'application (300) de jusqu'à 60 V.

8. Système robot selon l'une quelconque des revendications précédentes, dans lequel le câble (200) s'étend au moins sensiblement à l'intérieur du bras de robot (110).

9. Système robot selon l'une quelconque des revendications précédentes, dans lequel le robot (100) est isolé électriquement de la partie d'application (300) par une isolation (120), en particulier par une plaque en plastique, et/ou dans lequel le robot (100) est isolé électriquement du câble (200).

10. Système robot selon l'une quelconque des revendications précédentes, dans lequel l'adaptateur (400) présente sur un premier côté des premiers moyens de liaison, lesquels sont complémentaires aux moyens de liaison proximaux (150) du câble (200), et dans lequel l'adaptateur (400) présente sur un deuxième côté des deuxièmes moyens de liaison, lesquels sont complémentaires aux moyens de liaison de l'appareil de commande (500) ; ou
dans lequel l'adaptateur (400) présente sur un premier côté des premiers moyens de liaison, lesquels sont complémentaires à des moyens de liaison de la partie d'application (300), et
dans lequel l'adaptateur (400) présente sur un deuxième côté des deuxièmes moyens de liaison, lesquels sont complémentaires aux moyens de liaison distaux (140) du câble (200).

11. Utilisation d'un système robot selon l'une quelconque des revendications précédentes, dans lequel la partie d'application (300) est un appareil de traitement médical pour le traitement d'un patient, en particulier avec de l'énergie électrique, et/ou est un appareil de diagnostic médical, en particulier pour la détection de données relatives à au moins une fonction corporelle du patient.

12. Procédé de fabrication d'un système robot selon l'une quelconque des revendications 1 à 10, présentant :
(a) l'établissement d'une liaison électrique, en particulier amovible, entre l'adaptateur (400) et le câble (200) par le biais du moyen de liaison proximal (150) et l'établissement d'une liaison électrique, en particulier amovible, entre l'adaptateur (400) et l'appareil de commande (500) ; ou
(a') l'établissement d'une liaison électrique, en particulier amovible, entre l'adaptateur (400) et le câble (200) par le biais du moyen de liaison distal (140) et l'établissement d'une liaison électrique, en particulier amovible, entre l'adaptateur (400) et la partie d'application (300).

13. Procédé, en particulier selon la revendication 12, pour la fabrication d'un système robot selon l'une quelconque des revendications 1 à 10, présentant :
(b) la séparation d'une liaison électrique, en particulier amovible, entre l'adaptateur (400) et le câble (200) et en particulier la séparation d'une liaison électrique, en particulier amovible, entre l'adaptateur (400) et l'appareil de commande (500) ; ou
(b') la séparation d'une liaison électrique, en particulier amovible, entre l'adaptateur (400) et le câble (200) et en particulier la séparation d'une liaison électrique, en particulier amovible, entre l'adaptateur (400) et la partie d'application (300).

14. Procédé selon la revendication 13, présentant en outre :
(c) l'établissement d'une liaison électrique, en particulier amovible, entre un autre appareil de commande (500') et le câble (200), en particulier par le biais de l'adaptateur (400) ; ou
(c') l'établissement d'une liaison électrique, en particulier amovible, entre une autre partie d'application (300') et le câble (200), en particulier par le biais de l'adaptateur (400).

15. Procédé selon l'une quelconque des revendications de procédé précédentes, dans lequel l'adaptateur (400) est réalisé selon la revendication 12, étape (a) ou selon la revendication 13, étape (b), d'un seul tenant dans l'appareil de commande (500) ou dans lequel l'adaptateur (400) est réalisé selon la revendication 12, étape (a'), ou selon la revendication 13, étape (b'), d'un seul tenant dans la partie d'application (300).
